Europäisches Patentamt

European Patent Office

Office européen des brevets

(19)

(11) **EP 0 616 699 B1**

(12) **EUROPÄISCHE PATENTSCHRIFT**

(45) Veröffentlichungstag und Bekanntmachung des Hinweises auf die Patenterteilung:
**15.05.1996 Patentblatt 1996/20**

(21) Anmeldenummer: **92924700.5**

(22) Anmeldetag: **10.12.1992**

(51) Int Cl.⁶: $G03B\ 35/18$, $G03B\ 35/24$

(86) Internationale Anmeldenummer:
**PCT/EP92/02846**

(87) Internationale Veröffentlichungsnummer:
**WO 93/12455 (24.06.1993 Gazette 1993/15)**

(54) **PROJEKTIONSGERÄT**

PROJECTOR

PROJECTEUR

(84) Benannte Vertragsstaaten:
**AT BE CH DE DK ES FR GB GR IE IT LI LU MC NL PT SE**

(30) Priorität: **12.12.1991 DE 4140911**

(43) Veröffentlichungstag der Anmeldung:
**28.09.1994 Patentblatt 1994/39**

(73) Patentinhaber: **SW Stanzwerk Glarus AG CH-8750 Glarus (CH)**

(72) Erfinder: **Schulte, Wolfgang 60327 Frankfurt am Main (DE)**

(74) Vertreter: **Jochem, Bernd, Dipl.-Wirtsch.-Ing. Patentanwalt, Staufenstrasse 36 D-60323 Frankfurt am Main (DE)**

(56) Entgegenhaltungen:
US-A- 2 391 430      US-A- 3 014 403
US-A- 3 052 753      US-A- 4 078 854

## Beschreibung

Die Erfindung betrifft ein Projektionsgerät für Demonstrations- und Werbezwecke mit einem Objektträger für ein Objekt mit vorbestimmten Größtmaßen sowie jeweils einem auf der optischen Achse des Projektionsgeräts liegenden objektseitigen und bildseitigen Sammellinsensystem.

Derartige Projektionsgeräte (vgl. z. B. das Buch "Wie funktioniert das", Mannheim 1963, Seite 227) dienen normalerweise zur Projektion von zweidimensionalen Darstellungen auf Filmen, Folien und Papier auf eine Leinwand oder Mattscheibe. Die Abbildungen sind ebenfalls zweidimensional und wirken, wenn nicht mit Kunstgriffen, wie z. B. übereinander projizierten, verschiedenfarbigen Bildern und entsprechenden Brillen, gearbeitet wird, flach und wenig eindrucksvoll. Dasselbe gilt für Darstellungen mittels Videogeräten auf Bildschirmen.

Daneben werden zu Werbezwecken gelegentlich auch Hologramme eingesetzt, welche tatsächlich ein räumliches Bild eines Gegenstandes wiedergeben (vgl. Hanskarl Treiber und Martin Treiber, Lasertechnik 2, HOLOGRAPHIE, 5. Auflage, Stuttgart 1991). Hologramme erfordern jedoch eine komplizierte Aufnahmetechnik und zeigen dann jeweils nur das räumliche Bild des bei der Aufnahme benutzten Objekts in einer einzigen Stellung.

Demgegenüber liegt der Erfindung die Aufgabe zugrunde, ein Projektionsgerät der eingangs genannten Art zu schaffen, welches - neben seiner Eignung für die Wiedergabe zweidimensionaler Bilder - insbesondere auch für die plastische Wiedergabe körperlicher Gegenstände geeignet ist und mit sehr einfachen Mitteln für den Betrachter ein dreidimensionales, "im Raum stehendes" Bild eines realen, dreidimensionalen Gegenstandes erzeugt.

Vorstehende Aufgabe wird erfindungsgemäß dadurch gelöst, daß der Objektträger zur Lagerung eines dreidimensionalen Gegenstands ausgebildet ist, das bildseitige Sammellinsensystem eine Fresnellinse aufweist, die Länge des auf der optischen Achse gemessenen Strahlenwegs zwischen den beiden Sammellinsensystemen im wesentlichen gleich der Summe ihrer Brennweiten ist, der Durchmesser der Linsen der Sammellinsensysteme größer als die quer zur Hauptachse des objektseitigen Sammellinsensystems gemessene Ausdehnung des abzubildenden Gegenstands und der Abstand des Objektträgers vom objektseitigen Sammellinsensystem so klein ist, daß der Gegenstand wenigstens teilweise im Strahlengang hinter der Fresnellinse als dreidimensionales Luftbild abgebildet wird.

Mit dem vorgeschlagenen Gerät ist es möglich, für einen Betrachter, der im wesentlichen entlang der optischen Achse von hinten zur Fresnellinse blickt, ein Raumbild zu erzeugen, welches einen vor dem objektseitigen Sammellinsensystem angeordneten Gegenstand wiedergibt. Durch geeignete Wahl der Brennweiten dieses Sammellinsensystems und der Fresnellinse kann dabei wahlweise ein vergrößertes oder verkleinertes Bild des Gegenstandes erzeugt werden, wobei sich durch den Abstand des Objektes vom Sammellinsensystem festlegen läßt, ob sich das Bild für den Betrachter vollständig hinter der Fresnellinse befindet, oder aber - wegen der räumlichen Tiefe des Objektes - teilweise vor und teilweise hinter der Fresnellinse erscheint.

Unter Sammellinsensystemen werden hier sowohl einzelne Linsen als auch Systeme aus mehreren Linsen verstanden, selbst wenn diese eine oder mehrere Zerstreuungslinsen enthalten, solange nur insgesamt das Linsensystem fokusierende Eigenschaften und damit eine positive bildseitige Brennweite hat.

Das objektseitige Sammellinsensystem und die Fresnellinse bilden im vorliegenden Fall ein afokales oder nahezu afokales System, da ihre einander zugewandten Brennpunkte zusammenfallen oder nur bis zu etwa 10 % der Summe ihrer Brennweiten voneinander entfernt liegen. Dadurch wird erreicht, daß der abzubildende Gegenstand über alle Tiefenebenen des Objektraumes hinweg, d. h. unabhängig von der Objektweite, mit im wesentlichen demselben Abbildungsmaßstab dreidimensional abgebildet wird.

Die eindrucksvolle räumliche Wirkung des erzeugten Bildes ist auch darauf zurückzuführen, daß bei dem vorgeschlagenen Projektionsgerät die Linsen größer sind als die Querabmessung des abzubildenden Gegenstands. Auf diese Weise "sieht" das optische System nicht nur die ihm zugewandten Flächen des abzubildenden Gegenstads, sondern auch dessen Seitenflächen und ggf. sogar rückwärts geneigte Flächen und bildet diese mit ab.

Afokale optische Systeme fanden bisher nur zu anderen Zwecken Anwendung, z. B. bei Einstellung eines Fernrohrs auf große Entfernung.

In bevorzugter Ausgestaltung der Erfindung besteht das bildseitige Sammellinsensystem aus einer Fresnellinse, deren Brennweite größer ist als die Brennweite des objektseitigen Sammellinsensystems, so daß das erzeugte Luftbild eine Vergrößerung des abgebildeten realen Gegenstandes darstellt. Ein solches Projektionsgerät eignet sich insbesondere zur vergrößerten räumlichen Abbildung von Gegenständen, wie z. B. Schmuck, Uhren und anderen verhältnismäßig kleinen Gegenständen. In diesem Fall trägt nicht nur die optische Erscheinung des frei im Raum stehenden Luftbildes, sondern auch die ungewohnte räumliche Vergrößerung zur Verblüffung des Betrachters bei.

Für eine einfache Ausführungsform eines erfindungsgemäßen Projektionsgeräts genügen die bisher genannten Bauteile. Das Gerät wird jedoch verhältnismäßig lang und bildet die Gegenstände seitenverkehrt und auf dem Kopf stehend ab. Dies spielt allerdings bei vielen Gegenständen keine Rolle, vor allem dann nicht, wenn in bevorzugter Ausgestaltung der Erfindung der Objektträger rotierend antreibbar ist, so daß die darauf oder daran gelagerten Gegenstände dem abbildenden optischen System von vielen Seiten dargeboten werden.

Die praktische Brauchbarkeit des neuen Projektionsgeräts wird verbessert, wenn es als Standgerät mit unten angeordnetem Objektträger, darüber eingebautem objektseitigen Sammellinsensystem, darüber angeordneter Reflektoreinrichtung und seitlich neben dieser eingebauter Fresnellinse ausgebildet ist. Vorteilhaft ist dabei die Verkürzung der Länge, die platzsparende vertikale Ausrichtung des unteren Teils des Geräts bis auf Augenhöhe und die im wesentlichen horizontale Blickrichtung auf die Fresnellinse.

Die Reflektoreinrichtung kann ein einfacher Planspiegel sein, der mit einer Neigung von z. B. 35° bis 55°, vorzugsweise etwa 45° zur senkrechten Hauptachse des objektseitigen Sammellinsensystems geneigt eingebaut ist und die von unten kommenden Strahlen in eine hauptsächlich waagerechte Richtung zur Fresnellinse hin umlenkt. In weiterer Fortbildung dieses Gedankens können die an diesem ersten Spiegel umgelenkten Strahlen in ihrer horizontalen Ebene durch einen zweiten Spiegel nochmals um 90° umgelenkt werden, bevor sie zur Fresnellinse gelangen, wobei in bevorzugter Ausführung der zweite Spiegel und die Fresnellinse eine gemeinsam um eine quer zu den Hauptachsen des objektseitigen Sammellinsensystems und der Fresnellinse liegende Achse drehbare Einheit bilden. Auf diese Weise läßt sich die Hauptachse der Fresnellinse mit jedem individuell gewünschten Neigungswinkel zur Horizontalen einstellen.

In einer weiteren bevorzugten Ausführungsform der Erfindung besteht die Reflektoreinrichtung aus einem zur Hauptachse des objektseitigen Sammellinsensystems geneigten, teildurchlässig verspiegelten

Strahlteiler und wenigstens einem quer und/oder parallel zur Hauptachse des objektseitigen Sammellinsensystems angeordneten, ebenen Spiegel. Die Neigung des Strahl-teilers relativ zur Hauptachse des objektseitigen Sammellinsensystems kann dabei z. B. 45° betragen. Der Strahlteiler in Form einer einseitig teildurchlässig verspiegelten Glasplatte reflektiert einen Teil des unter einem Winkel von 45° auf ihn auftreffenden Lichtes, während der andere Teil hindurchgelassen wird. Im Idealfall sollten die Anteile von hindurchgelassenem und reflektiertem Licht gleich sein. Hinter dem Strahlteiler kann dann ein ebener Spiegel angeordnet sein, dessen Ebene senkrecht zur Achse des objektseitigen Sammellinsensy-stems steht. Das durch den Strahlteiler hindurchgelassene Licht wird an dem ebenen Spiegel zurück auf den Strahlteiler reflektiert und wiederum teilweise hindurchgelassen und teilweise am Strahlteiler reflektiert. Dieser letztgenannte Lichtanteil, der bis zu einem Viertel des ursprünglichen Lichtstroms ausmacht, trifft dann auf die Fresnellinse. Infolge der Reflektion am ebenen Spiegel zurück zum Strahlteiler wird der Strahlengang gefaltet, und das Projektionsgerät kann somit trotz relativ großer Brennweite des objektseitigen Sammellinsensystems und der Fresnellinse kompakt gebaut werden.

In einer bevorzugten Ausgestaltungsvariante besteht das objektseitige Sammellinsensystem aus zwei Plankonvexlinsen. Derartige Linsen sind mit relativ großen Durchmessern in guter optischer Qualität herstellbar und vergleichsweise preiswert.

Auch Fresnellinsen sind in relativ großen Abmessungen erhältlich, wobei die Größe dieser Linsen mitentscheidend sowohl für die mögliche Größe der darzustellenden Objekte als auch für die Bildvergrößerung, d. h. die Darstellung des gesamten, vergrößerten Objektes ist.

Zweckmäßigerweise sind die Plankonvexlinsen in wesentlichen gleichartig und werden mit einem Hauptpunktabstand relativ zueinander angeordnet, der etwa 1/4 bis 1/5 ihrer Einzelbrennweite entspricht. Diese Anordnung hat sich in der Praxis als besonders zweckmäßig erwiesen. Dabei sollten beide Plankonvexlinsen in gleicher Orientierung und mit einem Abstand der Planflächen zueinander angeordnet werden, der etwa 1/7 ihrer Brennweite entspricht. Die ebenen Seiten der Plankonvexlinsen werden dabei zweckmäßigerweise dem Objekt zugewendet.

Für praktische Zwecke hat es sich als besonders günstig erwiesen, wenn die Sammellinsen einen Krümmungsradius von ca. 185 mm und eine Scheiteldicke von etwa 19 mm haben und aus einem Material mit einem Brechungsindex größer als 1,5 bestehen. Der Durchmesser derartiger Linsen kann dann ohne weiteres 140 bis 150 mm oder mehr betragen.

Es ist an dieser Stelle anzumerken, daß für das objektseitige Sammellinsensystem eine Vielzahl anderer Linsen und Linsengruppen benutzt werden können, ggf. auch eine oder mehrere Fresnellinsen, sofern sie die jeweiligen Anforderungen an Größe, Brennweite und optische Abbildungsqualität erfüllen. Theoretisch könnte auch das bildseitige Sammellinsensystem aus wenigstens einer normalen Linse bestehen. Wegen der Grösse, des Gewichts, der Kosten und des äußeren Eindrucks ist jedoch an dieser Stelle eine Fresnellinse vorzuziehen.

In der bevorzugten Ausführungsform der Erfindung hat die Fresnellinse einen optischen Abstand (d. h. einschließlich des ggf. gefalteten Strahlenganges) von der Hauptebene des objektseitigen Sammellinsensystems im Bereich zwischen 95 % und 105 % der Summe der Brennweiten des Sammellinsensystems und der Fresnellinse. Als zweckmäßig hat es sich erwiesen, wenn dieser optische Abstand konkret im Bereich zwischen 710 und 760 mm liegt.

In einer weiteren bevorzugten Ausgestaltung hat das Projektionsgerät ein zweiteiliges Gehäuse, dessen erster Teil einen Objektträger und das im Abstand hiervon angeordnete Sammellinsensystem aufweist, während der zweite Teil den teilverspiegelten Strahlteiler, einen Planspiegel und eine Fresnellinse aufweist, wobei Planspiegel, Strahlteiler und Fresnellinse in der Seitenansicht ein gleichschenkliges, rechtwinkliges Dreieck bilden, dessen Hypotenuse der Strahlteiler ist und wobei die Gehäuseteile relativ zueinander so angeordnet sind, daß der Strahlteiler dem Sammellinsensystem zugewandt ist und die Strahlteilerebene unter etwa 45° von der Achse des Sammellinsensystems geschnitten wird. Diese beiden Gehäuseteile können leicht zu einem vollständigen Projektor zusammengesetzt werden.

Zweckmäßigerweise werden die beiden Gehäuseteile übereinander angeordnet, wobei im unteren Bereich des ersten Gehäuseteils sich der Objektträger befindet, darüber das Sammellinsensystem angeordnet ist und oben auf den ersten Gehäuseteil der zweite Teil des Gehäuses aufgesetzt wird. Der Strahlengang verläuft also zunächst vom Objekt aus vertikal nach oben und nach der zweifachen Reflexion am Spiegel und am Strahlteiler in einer horizontalen Ebene.

Der Objektträger ist ein vorzugsweise motorgetriebener Drehteller. Es versteht sich, daß sich dann mit dem Objekt für den Betrachter auch das Bild dreht und so verständlicherweise eine größere Aufmerksamkeit erregt als ein statisches Bild.

Außerdem ist im Bereich des ersten Gehäuseteils eine Kaltlichtquelle vorgesehen. Um ein entsprechend helles Bild des Objektes erzeugen zu können, muß verständlicherweise auch das Objekt selbst beleuchtet sein. Dabei wird trotz der Reflexions- und Durchgangsverluste am Strahlteiler ein überraschend helles Bild des Objektes erzeugt, das auch bei normalem Tageslicht gut sichtbar ist. Dies hängt u. a. damit zusammen, daß - im Gegensatz zur Projektion auf Mattscheiben - keinerlei Licht diffus in den Raum gestreut wird. Der Objektträger bzw. der Drehteller ist vorzugsweise eine Glasplatte, unterhalb welcher Leuchtstofflampen angeordnet sein können, deren Licht durch die Glasplatte hindurchdringt und zur Ausleuchtung des Objektes beiträgt. Zweckmäßigerweise können auch in dem den Drehteller umgebenden Raum Spiegel in der Weise angebracht werden, daß sie das Licht der vorhandenen Beleuchtungsquellen auf das Objekt reflektieren.

Besonders zweckmäßig ist eine Ausführungsform des Projektors, bei welchem am ersten Gehäuseteil, und vorzugsweise in dessen unterem Bereich, ein Vorsatzgehäuse zur Aufnahme wärmeerzeugender Bauteile vorgesehen ist. Hier könnte beispielsweise ein Motor für den Drehteller untergebracht sein oder aber auch eine wärmeerzeugende Lichtquelle, deren Licht über Glasfasern auf das Objekt geleitet wird, ohne daß dieses dabei merklich erwärmt wird.

In der bevorzugten Anwendung dient ein solches Projektionsgerät zur vergrößerten Darstellung relativ kleiner Gegenstände wie beispielsweise Uhren, Schmuck u. dgl. Das Objekt wird auf den Drehteller gelegt oder in einer entsprechenden Halterung auf dem Drehteller dekorativ angeordnet, wobei der Betrachter, der im Strahlengang hinter der Fresnellinse steht und in Richtung zur Fresnellinse blickt, ein vergrößertes räumliches Bild förmlich im Raum (von sich aus) vor und ggf. hinter der Fresnellinse "stehen" sieht. Dabei sieht er das Bild des Objektes in der gleichen Lage und im gleichen Bewegungszustand, wie ein anderer Betrachter das Objekt selbst von der Rückseite des Gehäuses her beim Betrachten des Drehtellers sieht.

Weitere Vorteile, Merkmale und Anwendungsmöglichkeiten der vorliegenden Erfindung werden deutlich anhand der folgenden Beschreibung einiger bevorzugter Ausführungsformen und der dazugehörigen Figuren. Es zeigen:

Fig. 1          eine schematische Darstellung der aufrechten und seitenrichtigen Wiedergabe eines Objektes bei einer ersten Ausführungsform des erfindungsgemäßen Projektionsgeräts;

Fig. 2          eine Seitenansicht des aus einem unteren und einem oberen Gehäuseteil bestehenden Projektionsgeräts nach Fig. 1;

Fig. 3          eine Rückansicht des Projektors nach Fig. 2;

Fig. 4a         einen Grundriß des unteren Gehäuseteils des Projektors nach Fig. 1 bis 3;

Fig. 4b         die Halterung von Plankonvexlinsen im unteren Gehäuseteil;

Fig. 5          einen Grundriß des oberen Gehäuseteils des Projektors nach Fig. 1 bis 3;

Fig. 6a, b      ein Einschubelement des unteren Gehäuseteils in der Draufsicht und im Längsschnitt;

Fig. 7a         eine einzelne Sammellinse;

Fig. 7b         ein Sammellinsensystem;

Fig. 8          eine schematische Darstellung der vergrößerten Abbildung eines Gegenstands durch ein nur aus einem objektseitigen Sammellinsensystem und einer Fresnellinse bestehenden afokalen System;

Fig. 9a, b      eine Seitenansicht und eine Ansicht aus Bildbetrachtungsrichtung eines Projektionsgeräts mit einmaliger Strahlumlenkung durch einen Planspiegel;

Fig. 10a, b     eine schematische Ansicht aus Bildbetrachtungsrichtung und eine Draufsicht auf ein Projektionsgerät mit einem festen und einem zusammen mit der Fresnellinse drehbaren Planspiegel.

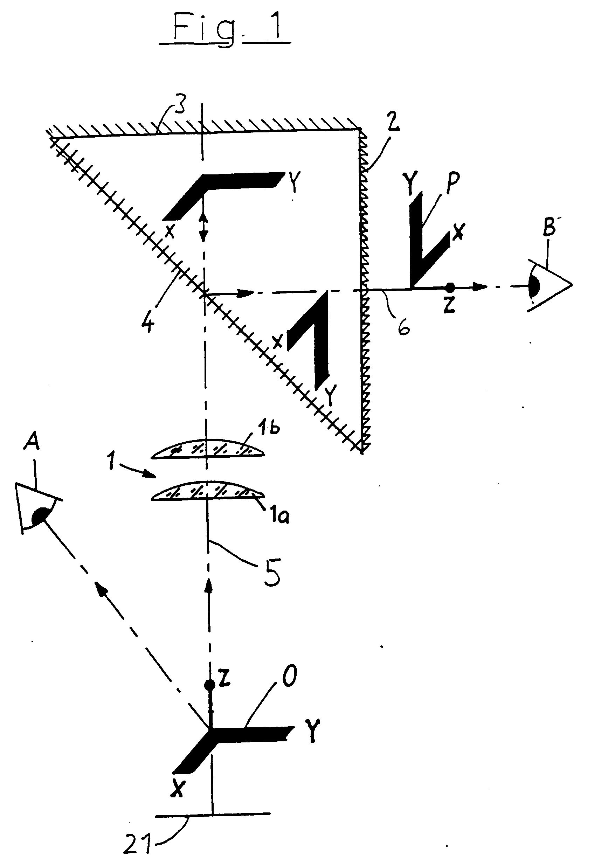

In Fig. 1 erkennt man unten ein beispielhaft als "L" dargestelltes Objekt O, welches sich beispielsweise auf einem Drehteller befinden kann. Dieses Objekt wird von einem Beobachter A links oberhalb des Objektes O in Fig. 1, dessen Auge schematisch dargestellt ist, seitenrichtig als großes "L" gesehen. Die Abbildung des Objektes erfolgt durch zwei Plankonvexlinsen 1a und 1b und eine Fresnellinse 2, wobei ein Teil des Lichtes, welches vom Objekt ausgeht und durch die Plankonveslinsen 1a, 1b gebündelt wird, an einem Strahlteiler 4 nach links reflektiert wird, während der andere Teil nach oben zu einem Deckenspiegel 3 hindurchgeht und am Deckenspiegel im wesentlichen vollständig zurückreflektiert wird. Dieses reflektierte Licht wird wiederum am Strahlteiler teilweise in Richtung der Fresnellinse 2 reflektiert, während der andere Teil durch den Strahlteiler hindurchgeht und für die Bilderzeugung keine Rolle mehr spielt.

Ein Beobachter B, der von rechts auf die Fresnellinse 2 blickt, würde allein aufgrund der zweifachen Spiegelung das Objekt seiten- und höhenverkehrt sehen, da er gerade die entgegengesetzte Beobachtungsrichtung zum Beobachter des Objektes hat. Das aus Plankonvexlinsen und Fresnellinsen bestehende optische System bewirkt jedoch eine weitere Bildumkehr, so daß der in die Fresnellinse sehende Beobachter im Ergebnis das Bild P des Objekts genau in der gleichen Orientierung und Lage sieht wie der Beobachter A, der von hinten direkt auf das Objekt selbst blickt. Dabei kann das Bild P entsprechend dem Brennweitenverhältnis von Fresnellinse und Sammellinsensystem auch vergrößert sein.

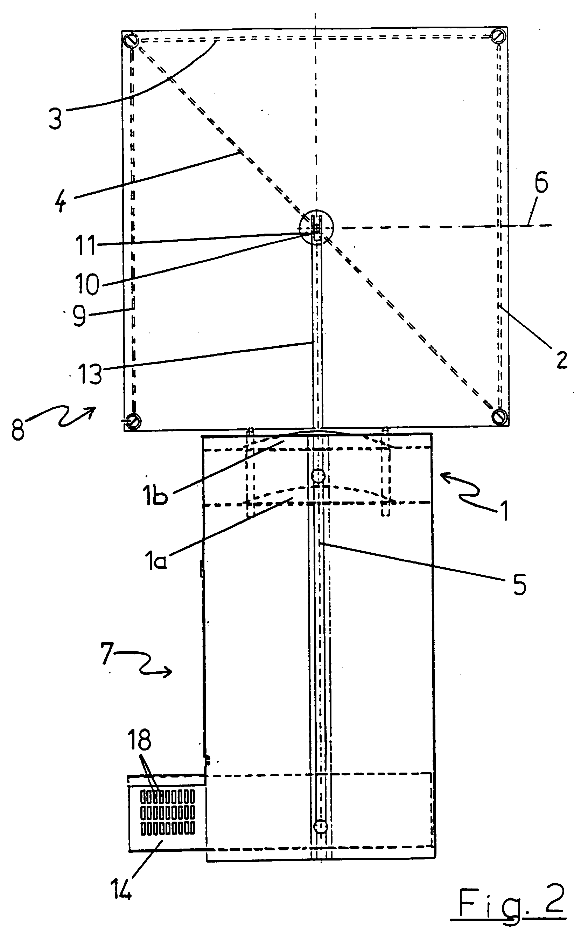

In Fig. 2 erkennt man den Projektor in einer Seitenansicht, wobei im Innern des Projektors liegende Systeme gestrichelt angedeutet sind. Der Projektor besteht aus einem unteren Gehäuseteil 7 und einem oberen Gehäuseteil 8. Im unteren Bereich des Gehäuseteils 7 befindet sich eine Schubladeneinheit 14. Diese Schubladeneinheit ragt teilweise aus dem Gehäuse 7 heraus, wobei in dem herausragenden Teil ggf. wärmeerzeugende Bauelemente untergebracht sein können. Zur Kühlung sind Luftschlitze 18 im Schubladenteil 14 vorgesehen.

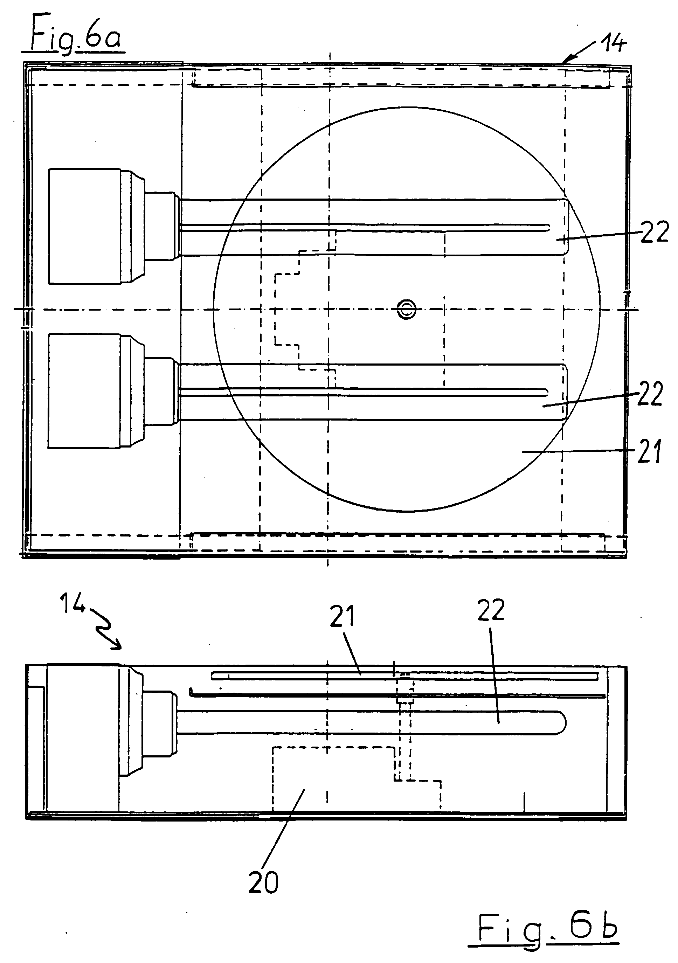

Das Objekt O befindet sich auf einem zum Schubladenteil 14 gehörenden Drehteller 21, wie noch im Zusammenhang mit Fig. 6 näher beschrieben werden wird.

Im oberen Bereich des Gehäuseteils 7 befindet sich eine Halterung für das Sammellinsensystem 1, welches aus den beiden in gleicher Orientierung hintereinander angeordneten Plankonvexlinsen 1a und 1b besteht. Die Plankonvexlinsen haben jeweils einen Durchmesser von etwa 140 mm, der Krümmungsradius der konvexen Fläche beträgt etwa 185 mm, die Scheiteldicke, d. h. der Bereich größter Dicke der Plankonvexlinse beträgt 18,9 mm. Verwendet wird ein Glas mit einem Brechungsindex von 1,5231.

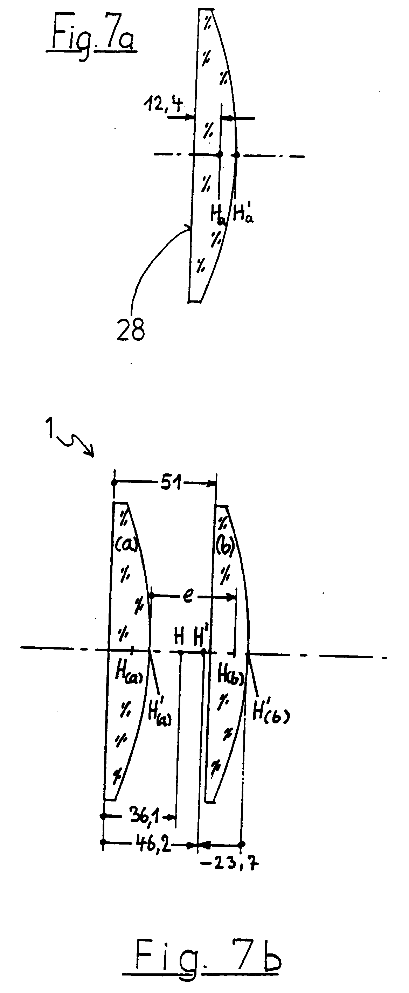

Aus diesen Daten lassen sich auch die Brennweiten und Hauptpunktlagen der einzelnen Plankonvexlinsen 1a, 1b berechnen. Der Abstand der beiden Planflächen beträgt etwa 51 mm, die Gesamtbrennweite dieses objektseitigen Linsensystems 1 beträgt etwa 188,7 mm (siehe Fig. 7). Die durch das Zentrum der Plankonvexlinsen 1a, 1b verlaufende optische Achse ist gestrichelt eingezeichnet und mit der Bezugszahl 5 gekennzeichnet.

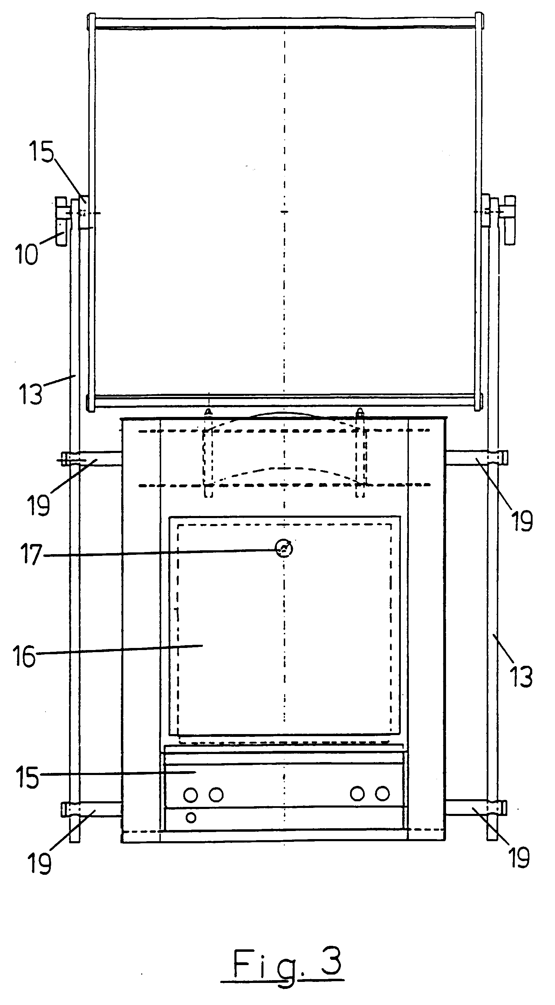

Der Gehäuseteil 8 ist oberhalb des Gehäuseteils 7 an zwei seitlich am Gehäuseteil 7 geführten Rundstäben 13 montiert, wie in Fig. 3 gut zu erkennen ist. Seitlich am Gehäuseteil 7 angebrachte Rundzapfen 19 sind durchbohrt, wobei durch diese Bohrungen die passenden Rundstäbe 13 geführt sind, die sich nach oben über die Länge des Gehäuseteils 7 hinaus erstrecken und an ihren oberen Enden geschlitzt sind. Der Abstand der Rundstäbe 13 ist etwas größer als das Breitenmaß des oberen Gehäuseteils 8. Dieses hat seilich in seinem mittleren Bereich Flügelschrauben 10 zur Befestigung, die über Rändelmuttern 15 gekontert sind.

Der Strahlteiler 4 verläuft in der in Fig. 2 dargestellten Ebene diagonal durch den oberen Gehäuseteil 8. Die Achse 11 der Befestigungsschrauben 10 liegt dabei genau in der Ebene des Strahlteilers. Die obere Innenfläche des Gehäuseteils 8 wird von dem ebenen Deckenspiegel 3 gebildet. Der Strahlteiler 4 besteht aus einer teildurchlässig verspiegelten Glasplatte. Das Licht, welches vom Objekt durch das Sammellinsensystem 1 nach oben gebündelt auf den Strahlteiler 4 fällt, wird von diesem teilweise nach links reflektiert und teilweise nach oben zum Deckenspiegel 3 hindurchgelassen. Die in Fig. 2 links gezeigte Rückwand des Gehäuseteils 8 kann wahlweise eine helle oder dunkle matte Wand sein, die das auf sie reflektierte Licht entweder verschluckt oder diffus reflektiert. Der Bildhintergrund erscheint dementsprechend dunkler oder heller.

Das vom Deckenspiegel 3 im wesentlichen vollständig reflektierte Licht trifft wieder auf den teildurchlässig verspiegelten Strahlteiler 4, wobei ein Teil dieses Lichtes ungenutzt nach unten zurück in Richtung des Sammellinsensystems 1 hindurchgelassen wird, während der andere, für die Darstellung des Bildes nutzbare Teil des Lichts vom Strahlteiler 4 nach rechts auf die lediglich als gestrichelte Doppellinie angedeutete Fresnellinse 2 reflektiert wird. Ein Beobachter des Bildes sieht von rechts entlang der optischen Achse 6 der Fresnellinse das Bild des auf dem Drehteller 21 befindlichen Objektes.

Es versteht sich, daß bei der Verwendung des beschriebenen Strahlteilers 4 die Rolle der in Fig. 2 links gezeigten Rückwand 9 und des Deckenspiegels 3 auch ohne weiteres vertauscht werden könnten. Der Spiegel 3 könnte also an der Rückwand 9 angeordnet sein, während die Decke eine matte Oberfläche hat. In diesem Fall würde der Strahlengang des für das Bild genutzten Lichtes so verlaufen, daß der am Strahlteiler 4 nach links reflektierte Teil des Lichts von dem an der Rückwand 9 angeordneten Spiegel zurückreflektiert und wieder auf den Strahlteiler 4 treffen würde, wobei dann der durch den Strahlteiler 4 hindurchtretende Teil des Lichts auf die Fresnellinse 2 treffen würde und so das Bild des Gegenstands erzeugen würde. Der optische Weg dieses Lichts ist in der dargestellten Anordnung in beiden Fällen exakt gleich lang, so daß sich an der Bedingung der Afokalität hierdurch nichts ändern würde. Auch der Anteil des für das Bild genutzten Lichts beträgt in beiden Fällen gleichermaßen bis zu 25%.

Verwendet man nun gleichzeitig einen Deckenspiegel 3 und ausserdem einen weiteren Planspiegel anstelle der Rückwand 9 und justiert die beiden Spiegel und den Strahlteiler sehr sorgfältig zueinander, so überlagern sich die beiden oben beschriebenen Strahlengänge und ergeben ein gemeinsames Bild, womit der Anteil des für das Bild genutzten Lichtstroms verdoppelt wird, also bis zu 50 % beträgt.

In Fig. 3 erkennt man in der Rückansicht noch eine Klappe oder Tür 16 mit einem Schloß 17, durch welche der Innenraum des unteren Gehäuseteils 7 zugänglich wird, um ggf. das auf dem Drehteller 21 befindliche Objekt austauschen zu können.

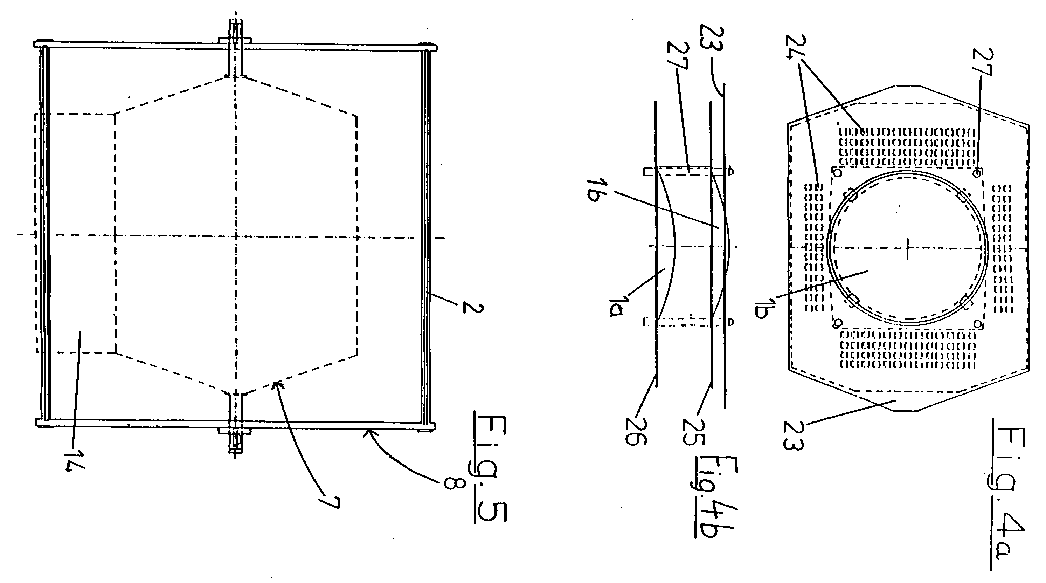

Fig. 4a ist eine Draufsicht auf den Gehäuseteil 7 von oben, die den Grundriß dieses Gehäuseteils 7, der im wesentlichen sechseckig ist, erkennen läßt. Der Oberteil des Gehäuses 7 wird von einer oberen Abschlußplatte 23 gebildet, die eine Vielzahl von Lüftungsöffnungen 24 hat. Unter der oberen Anschlußplatte 23 befinden sich im Abstand Halterungsplatten 25 und 26 zur Fixierung der Plankonvexlinsen 1a und 1b. Die Platten 25, 26 und 23 werden durch Schraubbolzen und Hülsen 27 in dem gewünschten Abstand voneinander gehalten. Es versteht sich, daß die Platten 23, 25 und 26 im wesentlichen konzentrische Blendenöffnungen im Bereich der Plankonvexlinsen 1a, 1b haben.

Fig. 5 ist eine Draufsicht auf den oberen Gehäuseteil 8, wobei der darunter befindliche Gehäuseteil 7 gestrichelt angedeutet ist.

In Fig. 6 ist das Schubladenteil 14 dargestellt, welches zwei Leuchtstoffröhren 22 und einen Motor 20 für den Drehteller 21 enthält. In diesem Gehäuseteil entstehende Wärme kann über den Teil dieser Schublade 14 abgeführt werden, der aus dem unteren Bereich des Gehäuseteils 7 herausragt. Der Drehteller 21 ist eine Glasplatte.

Die Fresnellinse 2 hat ein Format von 400 mm x 400 mm, wodurch auch im wesentlichen die Größe des zweiten Gehäuseteils 8 und der darin befindlichen Komponenten festgelegt wird. Die Brennweite der Fresnellinse beträgt 526 mm, ihre Dicke etwa 3,5 mm.

Der gesamte Projektor ist ein zweistufiges, im wesentlichen afokales Projektionssystem. Geringfügige Abweichungen vom afokalen Aufbau wirken sich im praktischen Betrieb nicht störend aus.

Damit ergibt sich im wesentlichen der gleiche Abbildungsmaßstab für Objekte mit unterschiedlicher Objektweite bzw. für alle Ebenen eines in der Tiefe ausgedehnten dreidimensionalen Objektes.

Der Abbildungsmaßstab ist im Prinzip beliebig wählbar und wird bei der Konstruktion des Projektors festgelegt, da er vom Quotienten der Brennweiten der beiden Teilsysteme abhängt. Der Abbildungsmaßstab $\beta'$ ist gleich $-f'(2)/f'(1)$, wobei $f'(2)$ die Brennweite der Fresnellinse und $f'(1)$ die Brennweite des Sammellinsensystems 1 ist.

Der Tiefenabbildungsmaßstab $\alpha'$ ist das Quadrat des lateralen Abbildungsmaßstabs, d. h. $\alpha' = \beta'^2$. Der afokale Aufbau bewirkt, daß die Tiefenhervorhebung oder -verkürzung über den gesamten Tiefenbereich konstant ist. Bei Vergrößerung wird also der Tiefeneindruck verstärkt.

Wie bereits erwähnt, ist das von dem Projektor gemäß Fig. 1 bis 6a, b erzeugte dreidimensionale Bild aufrecht und seitenrichtig. Durch die zweifache Spiegelung und Faltung des Strahlengangs kann der Projektor einen sehr kompakten Aufbau haben, wobei die Abmessungen des Projektors im wesentlichen nur noch von der Größe des Objekts, der Größe des gewünschten Bildausschnitts und dem gewünschten Vergrößerungsmaßstab abhängen. Bei dem konkret dargestellten Beispiel beträgt der Vergrößerungsfaktor etwa 2,8, so daß auch relativ kleine Objekte, wie Uhren, Schmuck u. dgl. als vergleichsweise große räumliche Bilder im Raum hinter der Fresnellinse stehen. Dabei ist die Bildhelligkeit bei entsprechender Beleuchtung ausreichend, um das Bild auch bei hellem Tageslicht für den Betrachter deutlich sichtbar werden zu lassen. Im praktischen Beispiel reicht eine Leistungsaufnahme der dargestellten Leuchtstoffröhren von 80 Watt hierfür ohne weiteres aus.

In Fig. 7a ist eine einzelne Planlinse dargestellt, deren rückwärtige Planfläche mit 28 bezeichnet ist. Eingezeichnet sind in Fig. 7a die Lagen der beiden Hauptebenen bzw. die beiden Hauptpunkte $H_a$, $H_a'$. Der Hauptpunkt H liegt bei den oben genannten Daten für die Linse im Abstand von 12,4 mm zu der Planebene 28. In Fig. 7b ist das objektseitige Sammellinsensystem dargestellt, welches aus zwei gleichartigen Plankonvexlinsen gemäß Fig. 7a besteht. Die beiden Sammellinsen 1a und 1b sind in gleicher Orientierung hintereinander angeordnet, wobei der Abstand der Planebenen der beiden Linsen 51 mm beträgt. Die Lagen der Hauptpunkte der einzelnen Linsen sind ebenso eingezeichnet wie die Lagen der Hauptpunkte H, H' des gesamten Linsensystems 1. Der Hauptpunktabstand ist mit e bezeichnet.

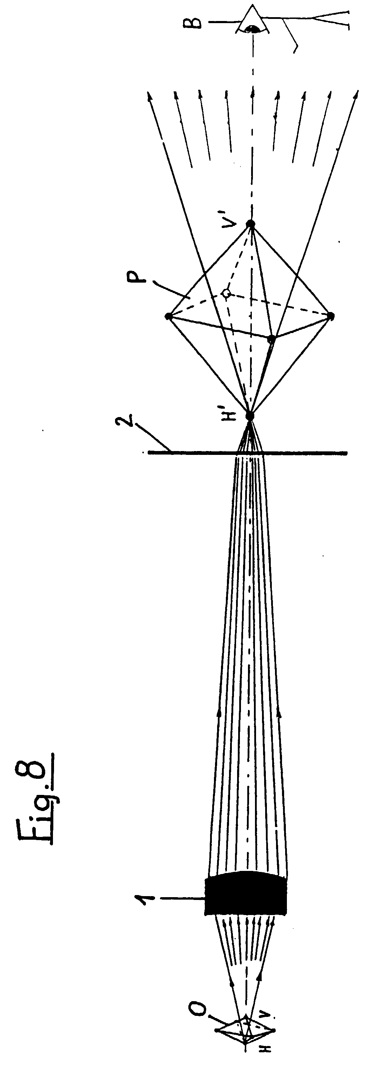

Fig. 8 zeigt schematisch einen Projektor mit gestrecktem Aufbau. Hierbei entfallen Strahlenteiler und Planspiegel und damit alle zusätzlichen Lichtverluste.

Das Luftbild P ist gegenüber der Objekt-Orientierung vollständig umgekehrt, d. h. höhen- und seitenvertauscht. Bei rotierendem Objekt ist dies gleichgültig; ein statisches Objekt muß "kopfstehend" in die Beleuchtungsbühne eingelegt werden.

Fig. 8 zeigt außerdem anschaulich die Entstehung des reellen Luftbilds und die Tiefenzuordnung: Ein Objektpunkt H wird als Strahlenschnittpunkt H' in der Luft vor dem Projektor abgebildet. Die durch H' ungestört weiterlaufenden Strahlen gelangen zum Teil in die Augenpupillen; die Augen sehen H' als leuchtenden Bildpunkt. Ein weiter vorn liegender Objektpunkt V wird nach den Abbildungsgleichungen als V' auch im Vordergrund abgebildet, d. h. das Bild ist tiefenrichtig (orthoskopisch).

Der Tiefenabbildungsmaßstab (Strecke H'-V' im Verhältnis zur Strecke H-V) ist mit dem Abbildungsmaßstab des afokalen Systems verknüpft und kann entsprechend variiert werden. Dabei kann ein besonders plastisches Raumbild auch bei relativ flachen Objekten durch Dehnung der Tiefenerstreckung (H'-V' größer als H-V) erhalten werden, wie die Zeichnung demonstriert. Umgekehrt ist auch eine Stauchung möglich.

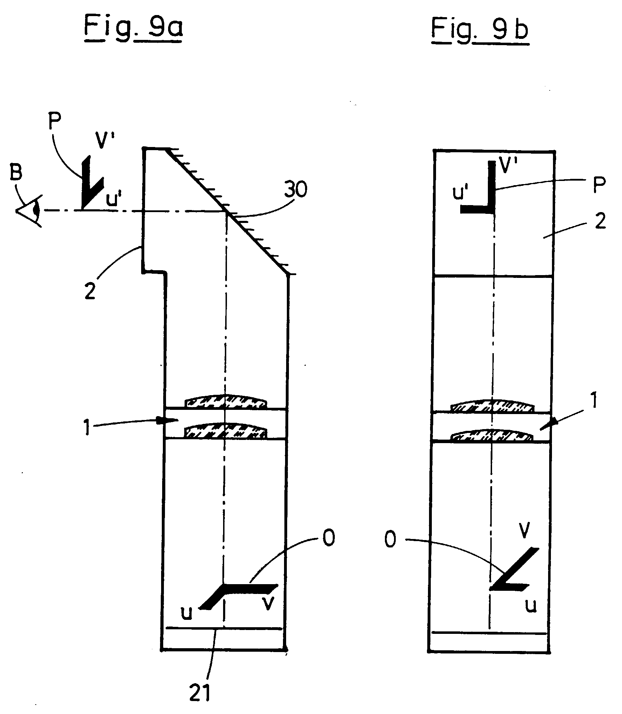

In Fig. 9a, b ist ein Projektor mit nur einem Planspiegel 30 dargestellt. Da der Strahlteiler 4 systembedingt, d. h. unvermeidbar, die größten Lichtverluste ergibt, wird er bei diesem Aufbau vermieden. Deckenspiegel 3 und Strahlteiler 4 (zwei Reflexionen) werden durch einen Planspiegel 30 (nur eine Reflexion) zur Strahlumlenkung ersetzt. Steht der Spiegel unter 45' zur optischen Achse, so ergibt sich eine Umlenkung um 90°.

Andere Knickwinkel erhält man durch Spiegeljustierung abweichend von 45° und Anpassung der Lage der Fresnellinse. Beispiel: Soll die Achse des Beobachungsstrahlengangs um 100° von der vertikalen optischen Achse abweichen, so ist der Spiegel auf 50° statt 45° einzustellen und die Fresnellinse um 10° zu neigen.

Da die bei der Ausführung nach Fig. 1 bis 6a, b gegebene Zusammenfaltung des Strahlengangs durch Hin- und Rückweg zwischen Deckenspiegel 3 und Strahlteiler 4 hier entfällt, muß der auf der Achse gemessene Abstand zwischen Sammellinsensystem 1 und Fresnellinse 2 entsprechend vergrößert werden.

Weil neben der vollständigen Bildumkehrung durch das Projektionssystem nur eine Spiegelung wirksam ist, ergibt sich ein "einseitig umgekehrtes" Bild: Um ein aufrechtes und seitenrichtiges Bild zu erzielen, reicht eine kopfstehende Orientierung des Objekts nicht aus, sondern es ist zusätzlich eine Klappung um eine Achse erforderlich. Objekte müssen also z. B. mit Spiegelschrift beschriftet werden; bei ebenen Vorlagen genügt eine seitenverkehrte Kopie.

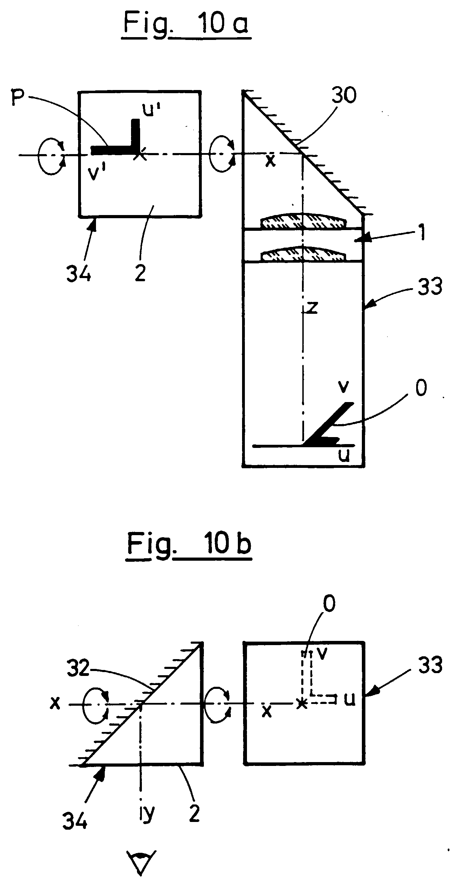

Fig. 10a, b schließlich zeigen einen Projektor mit einem schwenkbar am Projektorgehäuse 33 gelagerten Projektionskopf 34 (in der Zeichnung mit Zwischenabstand gezeigt). Bei dieser Ausführung ist es möglich, den Projektionskopf 34, bestehend aus einem Planspiegel 32 und der Fresnellinse 2, gegenüber dem (vertikal oder horinzontal angeordneten) Projektorgehäuse zu drehen. Die Drehung kann um 360' erfolgen, auch wenn dies bei der praktischen Anwendung nicht ausgenutzt wird.

Bei der Ausführung nach Fig. 1 bis 6a, b ist eine Schwenkung des Projektionskopfs unwirksam, weil zwei komplanare (d. h. in der Einfallsebene übereinstimmende) Spiegelungen (durch Deckenspiegel 3 und Strahlteiler 2) die Eigenschaft eines "Winkelspiegels" ergeben: Die Strahlumlenkung hat eine feste Richtung auch dann, wenn beide Spiegel gemeinsam gekippt werden. Sind Strahlenteiler 4 und Deckenspiegel 3 unter 45° fest zueinander angeordnet, so beträgt die Strahlablenkung "justierunabhängig", also nicht durch die Kippung des Systems beeinflußbar, 90°.

Bei Verwendung nur eines Planspiegels gemäß Fig. 9a, b ist in engerem Bereich eine Änderung der Umlenkrichtung möglich, wie bereits beschrieben.

Bei der Ausführung nach Fig. 10a, b werden jedoch zwei nicht komplanare Umlenkspiegel 30, 32 verwendet: Ist beispielsweise der Projektor senkrecht aufgestellt und damit die durch das Linsensystem 1 festgelegte optische Achse z vertikal ausgerichtet, so bewirkt der erste 45°-Umlenkspiegel 30 eine 90°-Umlenkung auf die horizontale x-Richtung. Ein weiterer 45°-Umlenkspiegel 32 führt nochmals zu 90°-Strahlumlenkung, z. B. horizontal nach vorn (y-Richtung).

Wird nun der Projektorkopf, bestehend aus Spiegel 32 und Fresnellinse 2, um die x-Achse geschwenkt, so kann die Beobachtungsrichtung beliebig geneigt werden. Beispielsweise wird bei einem über Augenhöhe angeordneten Projektorkopf die Beobachtungsrichtung so geneigt, daß die Augen des Beobachters B im Sichtbereich des reellen Luftbildes liegen.

Bei horizontal liegendem Projektor (z horizontal, x vertikal) kann durch Schwenken um die x-Achse eine beliebige seitliche Blickrichtung eingestellt werden.

Wird, unabhängig von dieser Schwenkung, die Neigung des Umlenkspiegels 32 und die Neigung der Fresnellinse 2 gemäß der Ausführung nach Fig. 9a, b angepaßt, so ist eine Änderung der Beobachtungsrichtung bezüglich zwei Koordinatenachsen möglich (z. B. horizontale Drehung in großem Bereich durch Schwenken des Projektionskopfes um die x-Achse, und in engerem Bereich Neigung nach oben oder unten durch Spiegel 32). Allerdings kann diese Richtungsanpassung auch durch Drehen des gesamten Projektors um die z-Achse (in engem Bereich durch Justierfüße) erreicht werden.

Mit dem Schwenken des Projektionskopfes um die x-Achse ändert sich die Bildorientierung relativ zum Objekt, d. h. es erfolgt eine Drehung des Bilds P in seiner Ebene. Die Zeichnung zeigt den Buchstaben L als Objekt (langer Balken v nach hinten, perspektivisch gezeichnet; kurzer Balken u nach rechts), und dazu das Bild u'-v', also ein um 90' gedrehtes, liegendes L. Bei Neigung des Projektionskopfes dreht sich das Bild. Eine Seitenvertauschung ("Spiegelschrift") tritt jedoch nicht auf.

Bei um die z-Achse rotierenden Objekten ist dieser Zusammenhang bedeutungslos; bei statischen Objekten kann eine Hilfestellung zum richtigen Anbringen des Objekts durch einander zugeordnete Winkelmarkierungen an der Projektionskopf-Einstellung und am Drehteller 21 gegeben werden.

Nachfolgend werden die Daten und Berechnungen des optischen Systems eines Ausführungsbeispiels angegeben:

## 1 LIEFERDATEN DER ABBILDENDEN EINZELKOMPONENTEN

### 1.1 Plankonvexlinsen:

Hersteller: Thermo-Optik Arnold GmbH & Co KG, Weilburg
Glas: B270; $n_d = 1,5231$
Radius: $r_2 = -185mm$; Scheiteldicke: d = 18,9mm +0,3/-0,5 mm.
Brennweite: $f' = -\dfrac{r_2}{n-1}$     $f' = -\dfrac{-185mm}{0,5231} = 353,66mm$

$$\underline{f' \approx 353,7 \text{ mm}}$$

Die Ausführung der Linsen entspricht den Angaben des Herstellers.

### 1.2 Fresnellinse:

Hersteller: Tokyo Optacryl Co., Ltd., Tokyo
Im Datenblatt wird nur die <u>Kondensoreinheit</u> aufgeführt und mit ihren Daten angegeben:

| Format | Brennweite | Dicke | usw. |
|---|---|---|---|
| 400 mm x 400 mm | 279 mm | 6,5 mm | |

Verwendet wird jedoch nur eine der beiden Fresnellinsen, Format ca. 350 mm x 375 mm.
Wenn die Gesamtbrennweite der beiden dicht hintereinande angeordneten, mit ihren Riffelflächen einander zugekehrten Linsen 279 mm betragen soll, muß die Einzellinse eir Brennweite von f' = 2 229 mm = 558 mm haben.
Durch eine Schnellmessung ergab sich jedoch eine <u>Ist-Brennweite</u>

$$\underline{f' = 526 \text{ mm} \pm 5 \text{ mm}}$$

Dieser Wert wird im folgenden benutzt.
Plattendicke d ≈ 3,5 mm.

## 2 BERECHNUNG DER HAUPTPUNKTLAGEN UND WEITERER DATEN

### 2.1 Eine Plankonvexlinse

Fläche 28 ist die Planfläche.
Dann beträgt der Abstand des Hauptpunktes H vom ersten Scheitel (= Planfläche)
$S_1 H = \dfrac{d}{n} = \dfrac{18,9 \text{ mm}}{1,5231} = 12,41$ mm.
$\underline{S_1 H \approx 12,4 \text{ mm}}$
Der zweite Hauptpunkt liegt bei Planlinsen immer im Scheitel der gekrümmten Fläche.
Also ist
$\underline{S_2 H' = 0}$
Fig. 7 zeigt die Hauptpunktlagen.

### 2.2 Abbildendes System aus zwei gleichen Planlinsen

Dieses System wird mit (1), die Fresnellinse mit (2) be zeichnet. Um Verwechselungen zu vermeiden, werden die beiden einzelnen Planlinsen mit (a) und (b) bezeichnet.
Der Abstand der Planflächen beider Linsen beträgt <u>51 mm</u> (Abstandhalter + Blechdicke).
Freier Durchmesser durch Blende an Planflächen≈140 mm.
Mit den Werte von 1.1 und 2.1 ergibt sich für den Hauptpunktabstand $e = H'_{(a)} H_{(b)}$ der beiden Linsen:
$$e = 51 \text{ mm} - 18,9 \text{ mm} + 12,4 \text{ mm}$$
$$\underline{e = 44 \text{ mm}}$$
Für das System aus zwei Planlinsen erhält man dann als Brennweite

$$f' = \frac{f'_{(a)} \cdot f'_{(b)}}{f'_{(a)} + f'_{(b)} + e} \qquad f' = \frac{353,7^2}{2 \cdot 353,7 - 44,5} = 188,72$$

<u>f' 188,7 mm</u>
Die Hauptpunkte H und H' des Gesamtsystems haben von den Hauptpunkten der Einzellinsen die folgenden Ab-

stände:

$$H_{(a)}H : e \cdot \frac{f'}{f'_{(b)}} \qquad H_{(a)}H = 44,5 \cdot \frac{188,7}{353,7} = 23,74 \text{ mm}$$

$$\underline{H_{(a)}H \approx 23,7 \text{ mm}}$$

$$H'_{(b)}H' = -e \cdot \frac{f'}{f'_{(a)}}.$$

Wegen gleicher Brennweite der Linsen (a) und (b) folgt symmetrisch zur ersten Hauptpunktlage

$$\underline{H'_{(b)}H' \approx -23,7 \text{ mm}}$$

Für die folgenden Berechnungen werden der Übersichtlichkeit halber hier noch die Abstände $S_{1a}H$ und $S_{1a}H'$ der beiden Hauptpunkte gegenüber der Planfläche der ersten Linse (a) angegeben:

$$S_{1a}H = 12,4 \text{ mm} + 23,7 \text{ mm} \qquad \underline{S_{1a}H = 36,1 \text{ mm}}$$

$$S_{1a}H' = 51 \text{ mm} + 18,9 \text{ mm} - 23,7 \text{ mm} \qquad \underline{S_{1a}H' = 46,2 \text{ mm}}$$

Die Skizze zeigt die wesentlichen Daten für das System (1) aus zwei Planlinsen.

## 2.3 Fresnellinse

Die Hauptpunkte H und H' der Fresnellinse fallen mit ausreichender Genauigkeit mit der Ringzonenfläche (geriffelte Fläche) der Linse zusammen.

## 3 OPTISCHE DATEN DES GESAMTSYSTEMS

### 3.1 Brennweite und Hauptpunktlagen

Im folgenden wird das System aus zwei Planlinsen nach 2.2 als System (1) bezeichnet, die Fresnellinse als System (2).

Der Hauptpunktabstand dieser beiden Teilsysteme, $e = H'_{(1)}H_{(2)}$ ergibt sich aus folgender Rechnung:

Gemäß den Baumaßen des Ausführungsbeispiels beträgt der Abstand zwischen der Planfläche von Linse (b) und der Fresnellinse $S_{1b}H_{(2)} = 208 + 172 + 172 + 176 = 728$ mm. Da H' von System 1 um 46,2 mm hinter der Planfläche der Linse (a) liegt, wird

$$e = 728 + 51 - 46,2 \text{ mm}; \qquad \underline{e = 732,8 \text{ mm}}.$$

Damit erhält man für die Gesamtbrennweite des Projektionssystems (2 Planlinsen + Fresnellinse)

$$f' = \frac{f'_{(1)} \cdot f'_{(2)}}{f'_{(1)} + f'_{(2)} - e} \qquad f' = \frac{188,7 \cdot 526}{188,7 + 526 - 732,8}$$

$$\underline{f' = -5484 \text{ mm}}.$$

Für die Hauptpunktlagen des Gesamtsystems ergibt sich

$$H_{(1)}H = e \cdot \frac{f'}{f'_{(2)}} \qquad H_{(1)}H = 732,8 \cdot \frac{-5484}{526} \qquad \underline{H_{(1)}H = 7640 \text{ mm}}$$

$$H'_{(2)}H' = -e \cdot \frac{f'}{f'_{(1)}} \qquad H'_{(2)}H' = -732,8 \cdot \frac{-5484}{188,7}$$

$$\underline{H'_{(2)}H' = 21296 \text{ mm}}$$

## 4 AFOKALE SYSTEME

### 4.1 Eigenschaften eines afokalen Systems

Ein afokales ("brennpunktloses") zweistufige System liegt dann vor, wenn der Hauptpunktabstand gleich der Summe der Brennweiten ist:

$$e = f'_{(1)} + f'_{(2)}$$

Dann fallen die Brennpunkte $F'_{(1)}$ und $\bar{F}_{(2)}$ zusammen.

Für das Gesamtsystem gilt dann

$$f' = \infty , \ H_{(1)}H = \infty , \ H'_{(2)}H' = \infty .$$

Im unendlichen liegende Objekte werden wieder nach unendlich abgebildet. Ein Beispiel für eine solche Anwendung ist ein auf große Entfernung scharf eingestelltes Fernrohr.

Afokale Systeme haben aber noch eine weitere sehr nützliche Eigenschaft: Sie bilden auch Objekte in endlicher Lage ab, und zwar mit konstantem Abbildungsmaßstab unabhängig von der Objektweite (!).

Für den Abbildungsmaßstab ergibt sich

$$\beta' = -\frac{f'_{(2)}}{f'_{(1)}}$$

Das ist der Abbildungsmaßstab in der Bildebene x-y senkrecht zur optischen Achse z.

Bei dreidimensionalen Objekten gilt aber für die Abbildung der Tiefenausdehnung $\Delta z$ des Objekts in die Tiefenausdehnung $\Delta z'$ des Bildes der Tiefenabbildungmaßstab

$$\alpha' = \beta'^2$$

Dies bedeutet, daß die Tiefenausdehnung im Vergleich zu den übrigen Abmessungen um den Faktor $\beta'$ vergrößert ($|\beta'|>1$) oder verkleinert ($|\beta'|<1$) dargestellt wird. Das kann je nach Anwendung nützlich oder störend sein.

Nur bei unvergrößerter Abbildung ($\beta' = \pm1$) wird die Tiefenausdehnung unverzerrt dargestellt.

Durch passende Wahl der beiden Brennweiten $f'_{(1)}$ und $f'_{(2)}$ und darauf abgestimmten Abstand e ist also ein weiter Bereich des Abbildungsmaßstabs verfügbar; 3D-Objekte werden entlang ihrer Tiefenausdehnung mit konstantem Abbildungsmaßstab $\beta'$ dargestellt, aber dabei in ihrem Tiefeneindruck hervorgehoben oder verkürzt (bis auf $\beta' = \pm1$).

4.2 Reales System nach Abschnitt 3

Die großen Werte für f' ($\approx$ -5,5 m), $H_{(1)}H$ ($\approx$ 7,6 m) und $H'_{(2)}H'$ ($\approx$ 21,3 m) und die nahe beieinander liegenden Brennpunkte $F'_{(1)}$ und $\bar{F}_{(2)}$ zeigen, daß das aufgebaute System eine Annäherung an ein afokales System darstellt.

Im vorliegenden Fall ergab sich ein Hauptpunktabstand

$$e = 732,8 \ mm;$$

für ein afokales System müßte

$$e = 526 \ mm + 188,7 \ mm, \ e = 714,7 \ mm$$

$$\overline{\qquad\qquad}$$

$$Differenz \quad 18,1 \ mm$$

sein.

Dieser Unterschied hat erstens keine großen Auswirkungen für die Anwendung des Projektors, zweitens liegt die Differenz wegen der Toleranzen verschiedener Abmessungen (u. a. Brennweite der Fresnellinse, Zeichnungsangaben) innerhalb der Toleranzbreite.

Dies bedeutet, daß sich (zumindest für eine bestimmte Wellenlänge) für den aufgebauten Projektor auch eine streng afokale Anordnung ergeben kann.

Nimmt man streng afokalen Aufbau an, d. h. ist

$f'_{(1)}$ = 188,7 mm; $f'_{(2)}$ = 526 mm; e = 714,7 mm, so wird der Abbildungsmaßstab

$\beta' = -\frac{526}{188,7}$; $\underline{\beta' = -2,79}$

genau: - 2,7875) und der Tiefenabbildungsmaßstab

$\alpha'$ = (-2,79)2; $\underline{\alpha' = 7,78}$

Ein 3D-Objekt wird also in allen drei Dimensionen 2,79-fach vergrößert abgebildet, aber in der Tiefenrichtung zusätzlich um den Faktor 2,79 gedehnt (verstärkte Hervorhebung der Tiefe).

Mit diesen Daten für afokale Anordnung sollen im folgenden Abschnitt die realen Daten verglichen werden.

5 ABBILDUNG VON 3D-OBJEKTEN DURCH DEN PROJEKTOR

5.1 Abbildung einer Ebene

Als Beispiel wird die Abbildung der Ebene "größter Schärfe" gemäß den vorstehenden Daten ausführlich berechnet.

In der Zeichnung ist der Abstand dieser Ebene von der Planfläche der Linse (a) angegeben: $s_{1a}$ = -150 mm.

Daraus ergibt sich für das System (1) eine Gegenstandsweite $a_{(1)} = s_{1a} - S_{1a}H$ ; $a_{(1)}$ = -150 mm - 36,1 mm ; $\underline{a_{(1)} = -186,1 \ mm}$.

Mit der Abbildungsgleichung erhält man die Bildweite:

$$a'_{(1)} = \frac{a_{(1)} \cdot f'_{(1)}}{a_{(1)} + f'_{(1)}} \ ; \ a'_{(1)} = \frac{(-186,1) \cdot 188,7}{-186,1 + 188,7} ;$$

$\underline{a'_{(1)} = -13507 \ mm}$.

Für das System (1) ergibt sich der Abbildungsmaßstab $\beta'_{(1)} = a'_{(1)}/a_{(1)}$ ; $\underline{\beta'_{(1)} = +72{,}58}$
Die Abbildung durch das Planlinsensystem ist stark vergrößert und virtuell.
Das virtuelle Bild von (1) wird nun durch die Fresnellinse (2) abgebildet. Es ist

$a_{(2)} = a'_{(1)} - e$ ; $a_{(2)} = -13507$ mm $- 732{,}8$ mm ;
$\underline{a_{(2)} = -14240\ \text{mm}}$ .

Mit der Abbildungsgleichung erhält man die Bildweite

$$a'_{(2)} = \frac{a_{(2)} \cdot f'_{(2)}}{a_{(2)} + f'_{(2)}} \ ; \ a'_{(2)} = \frac{(-14240) \cdot 526}{-14240 + 526} \ ;$$

$\underline{a'_{(2)} = 546\ \text{mm}}$
Für die Fresnellinse (2) ergibt sich der Abbildungsmaßstab
$\beta'_{(2)} = a'_{(2)}/a(2)$ ; $\underline{\beta'_{(2)} = -0{,}03834}$ .
Als Gesamt-Abbildungsmaßstab ergibt sich damit $\beta' = \beta'_{(1)} \cdot \beta'_{(2)}$ ; $\underline{\beta' = -2{,}783}$ .
Der Abbildungsmaßstab weicht also nur sehr geringfügig von dem in 4.2 berechneten Wert (afokaler Fall) ab.
Das Bild der 150 mm vor der Planfläche der ersten Linse liegenden Objektebene liegt als reelles Luftbild im Abstand von 546 mm vor der Fresnellinse, also im Raum zwischen Projektor und Beobachter.
Die Werte in der folgenden Tabelle wurden entsprechend diesem Beispiel berechnet.
Die Tabelle zeigt in Spalte 1 die Lage der Objektebene, d. h. den Abstand $s_{1a}$ von der Planfläche der ersten Linse. Spalte 6 gibt die Bildweite $a'(2)$ an, d. h. den Abstand des Bildes von der Fresnellinse.
Positive Werte bedeuten eine Lage des Bildes vor der Fresnellinse, d. h. im Raum zwischen Fresnellinse und Beobachter. Das Bild ist reell.
Bei negativen Werten liegt das Bild hinter der Fresnellinse, d. h. "im Projektor". Das Bild ist dann virtuell.
Bei $s_{1a} \approx -218$ mm fällt das Bild mit der Fresnellinse zusammen.
Bei allen Angaben ist zu berücksichtigen, daß sich durch Bauelemente- und Maßtoleranzen des Aufbaus bei der praktischen Messung am Projektor etwas andere Werte ergeben können.
Der Tiefenabbildungsmaßstab (Spalte 9) wurde nicht als $\beta'_2$, sondern aus den tatsächlichen Differenzen der Bildlagen und Objektlagen berechnet.
Die Bildlage $a'_{(2)}$ als Funktion der Objektlage $s_{1a}$ hat einen nahezu linearen Zusammenhang; bei afokalem Aufbau wäre er streng linear. In diesem Fall könnte (nur für diesen Projektor!) die Bildlage auch aus der Gleichung
$a'_{(2)} = 1992$ mm $+ 7{,}769 \cdot a_{(1)}$ berechnet werden.
Die Tabelle zeigt in den Spalten 8 und 9, daß $\beta'$ und $\alpha'$ nicht völlig konstant sind. Das ist eine Folge des nicht streng afokalen Aufbaus.

5.2 Tabelle mit Objektlagen, Bildlagen, Abbildungsmaßstäben

Grafische Darstellung des Zusammenhanges von Objekt- und Bildlagen

| 1 | 2 | 3 | 4 | 5 | 6 | 7 | 8 | 9 |
|---|---|---|---|---|---|---|---|---|
| Abstand von Planfläche Linse (a) | $a_{(1)}$ | $a'_{(1)}$ | $\beta'_{(1)}$ | $a_{(2)}$ | $a'_{(2)}$ | $\beta'_{(2)}$ | $\beta'$ | $\alpha$ |
| - 90 | -126,1 | -380,11 | 3,0144 | -1112,91 | 997,41 | -0,89662 | -2,702 | 7,37 |
| -110 | -146,1 | -647,16 | 4,4296 | -1379,98 | 849,99 | -0,61595 | -2,728 | 7,52 |
| -130 | -166,1 | -1386,86 | 8,3495 | -2119,60 | 699,61 | -0,33006 | -2,756 | 7,67 |
| -150 "größte Schärfe" | -186,1 | -13506,6 | 72,577 | -14239,4 | 546,18 | -0,038357 | -2,784 | 7,83 |
| -170 | -206,1 | 2235,12 | -10,845 | 1502,32 | 389,59 | 0,25933 | -2,812 | 7,99 |
| -190 | -226,1 | 1140,78 | -5,0455 | 407,98 | 229,77 | 0,56319 | -2,842 | 8,16 |
| -210 | -246,1 | 809,04 | -3,2874 | 76,24 | 66,59 | 0,87343 | -2,871 | 8,33 |
| -230 | -266,1 | 648,75 | -2,4380 | -84,05 | -100,03 | 1,1901 | -2,901 | 8,51 |
| -250 Drehbühne | -286,1 | 554,28 | -1,9374 | -178,52 | -270,24 | 1,5138 | -2,933 | |

NACHWEIS DER BILDAUFRICHTUNG BEI DER AUSFÜHRUNG NACH FIG. 1 BIS 6a,b

Der Projektor erzeugt von einem Gegenstand ein aufrechtes Bild, d. h. das Bild zeigt in der X-Y-Ebene senkrecht zur Ausbreitungsrichtung die gleiche Orientierung wie der Gegenstand.

Als Orientierungssymbol wird in Fig. 1 der Buchstabe "L" benutzt - man sieht ihn bei Objekt O und Bild P in der gleichen Lage.

Einen wesentlichen Einfluß hat dabei auch die Festlegung der Beobachtungsrichtungen: Das Objekt 0 wird beim Beschicken des Drehtellers 21 (schräg) von oben betrachtet, wobei der Beobachter A hinter dem Projektor steht. Das Bild P wird von der Vorderseite des Projektors (Blick auf die Fresnellinse) beobachtet.

Durch zwei komplanare Spiegelungen (Deckenspiegel 3 und Strahlteiler 4) ergibt sich zusammen mit der Änderung der Beobachtungsrichtung ein vollständig umgekehrtes Bild (Symbol links von der Fresnellinse).

Durch das Abbildungssystem erfolgt nochmals vollständige Umkehrung und damit insgesamt eine Aufrichtung (Symbol rechts von der Fresnellinse).

Die Umkehrung durch das Abbildungssystem erfolgt immer bei reeller Abbildung: In dem betrachteten Objektbereich von -90 mm bis -150 mm (Spalte 1 der Tabelle 5.2) ist das von dem Planlinsensystem 1 entworfene Zwischenbild virtuell; es wird durch die Fresnellinse 2 reell abgebildet.

Im Bereich -170 mm bis -250 mm ist das Zwischenbild reell und damit umgekehrt; die Fresnellinse beeinflußt die Bildlage nicht mehr, da sie entweder ein reelles Bild eines virtuellen Objekts (-170 mm bis -210 mm) oder ein virtuelles Bild eines reellen Objekts (-230 mm; -250 mm) erzeugt.

Insgesamt ergibt sich also, daß unter Berücksichtigung der Beobachtungsrichtungen die Kombination aus zwei komplanaren Spiegelungen und einmaliger Umkehrung durch das zweistufige Projektionssystem ein aufrechtes Bild ergibt.

Im aufgefalteten Strahlengang (vgl. Fig. 8) fehlen natürlich die komplanaren Spiegelungen; bei Betrachtung von Objekt und Bild aus gleicher Richtung ist das Bild vollständig umgekehrt. Deshalb zeigt die Tabelle 5.2 in Spalte 8 stets einen negativen Gesamt-Abbildungsmaßstab $\beta'$, d. h. Bildumkehrung!

**Patentansprüche**

1.  Projektionsgerät für Demonstrations- und Werbezwecke mit einem Objektträger (21) für ein Objekt mit vorbestimmten Größtmaßen sowie jeweils einem auf der optischen Achse des Projektionsgeräts liegenden objektseitigen und bildseitigen Sammellinsensystem (1, 2), **dadurch gekennzeichnet,** daß der Objektträger (21) zur Lagerung eines dreidimensionalen Gegenstands (0) ausgebildet ist, das bildseitige Sammellinsensystem eine Fresnellinse (2) aufweist, die Länge des auf der optischen Achse (5, 6) gemessenen Strahlenwegs zwischen den beiden Sammellinsensystemen (1, 2) im wesentlichen gleich der Summe ihrer Brennweiten ist, der Durchmesser der Linsen der Sammellinsensysteme (1, 2) größer als die quer zur Hauptachse (5) des objektseitigen Sammellinsensystems (1) gemessene Ausdehnung des abzubildenden Gegenstands (0) und der Abstand des Objektträgers (21) vom objektseitigen Sammellinsensystem (1) so klein ist, daß der Gegenstand (0) wenigstens teilweise im Strahlengang hinter der Fresnellinse (2) als dreidimensionales Luftbild (P) abgebildet wird.

2.  Projektionsgerät nach Anspruch 1, **dadurch gekennzeichnet,** daß das bildseitige Sammellinsensystem aus einer Fresnellinse (2) besteht, deren Brennweite größer ist als die Brennweite des objektseitigen Sammellinsensystems (1).

3.  Projektionsgerät nach Anspruch 1 oder 2, **dadurch gekennzeichnet,** daß es als Standgerät ausgebildet ist mit dem unten angeordneten Objektträger (21), dem darüber eingebauten, objektseitigen Sammellinsensystem (1), einer darüber angeordneten Reflektoreinrichtung (3, 4; 30, 32) und der seitlich neben dieser eingebauten Fresnellinse (2).

4.  Projektionsgerät nach Anspruch 3, **dadurch gekennzeichnet,** daß die Reflektoreinrichtung aus einem zur Hauptachse (5) des objektseitigen Sammellinsensystems (1) geneigten, teildurchlässig verspiegelten Strahlteiler (4) und wenigstens einer im wesentlichen quer und/oder parallel zur Hauptachse (5) des objektseitigen Sammellinsensystems (1) angeordneter Planspiegel (3) besteht.

5.  Projektionsgerät nach Anspruch 4, **dadurch gekennzeichnet,** daß der Strahlteiler (4) unter etwa 35° bis 55°, vorzugsweise 45°, geneigt zur Hauptachse (5) des objektseitigen Sammellinsensystems (1) angeordnet ist.

6.  Projektionsgerät nach Anspruch 3, **dadurch gekennzeichnet,** daß die Reflektoreinrichtung einen unter etwa 35° bis 55°, vorzugsweise 45°, zur Hauptachse (5) des objektseitigen Sammellinsensystems (1) geneigten, ersten Planspiegel (30) aufweist.

**7.** Projektionsgerät nach Anspruch 6, **dadurch gekennzeichnet,** daß die Reflektoreinrichtung einen zweiten Planspiegel (32) aufweist, welcher im Strahlengang zwischen dem ersten Planspiegel (30) und der Fresnellinse (2) angeordnet und unter etwa 35° bis 55°, vorzugsweise 45°, zu deren Hauptachse geneigt ist.

**8.** Projektionsgerät nach Anspruch 7, **dadurch gekennzeichnet,** daß der zweite Planspiegel (32) und die Fresnellinse (2) als Einheit (34) relativ zum objektseitigen Sammellinsensystem (1) und dem ersten Planspiegel (30) um eine quer zu den Hauptachsen (5, 6) des objektseitigen Sammellinsensystems (1) und der Fresnellinse (2) liegende Achse (x-x) drehbar sind.

**9.** Projektionsgerät nach einem der Ansprüche 3 bis 8, **dadurch gekennzeichnet,** daß die Reflektoreinrichtung (3, 4; 30, 32) und die Fresnellinse (2) als Einheit (8) relativ zum objektseitigen Sammellinsensystem (1) um eine quer zu dessen Hauptachse (5) liegende Achse (11) verschwenkbar sind.

**10.** Projektionsgerät nach Anspruch 1, **dadurch gekennzeichnet,** daß der Objektträger ein rotierend antreibbarer Drehteller (21) ist.

## Claims

**1.** Projector for demonstration and advertising purposes with a specimen holder (21) for a specimen with predetermined maximum dimensions and converging lens systems (1, 2) on the optical axis of the projector, one on the specimen side and the other on the image side, **characterised in that** the specimen holder (21) is designed to hold a three-dimensional object (0), the converging lens system on the image side incorporates a Fresnel lens (2), the length of the beam path measured along the optical axis (5, 6) between the two converging lens systems (1, 2) is essentially equal to the sum of their focal lengths, the diameter of the lenses in the converging lens systems (1, 2) is greater than the extension of the object (0) to be visualised measured transversely to the main axis (5) of the converging lens system (1) on the specimen side and the distance of the specimen-holder (21) from the converging lens system (1) on the specimen side is so small that the object (0) is visualised at least partially in the beam path behind the Fresnel lens (2) as a three-dimensional free-standing image (P).

**2.** Projector in accordance with Claim 1, **characterised in that** the converging lens system on the image side consists of a Fresnel lens (2), the focal length of which is greater than the focal length of the converging lens system (1) on the specimen side.

**3.** Projector in accordance with Claim 1 or 2, **characterised in that,** as an upright unit, it is designed with the specimen holder (21) at the bottom, the converging lens system (1) on the specimen side fitted above it, a reflector arrangement (3, 4; 30, 32) positioned above that and the Fresnel lens (2) fitted at the side next to the said reflector arrangement.

**4.** Projector in accordance with Claim 3, **characterised in that** the reflector arrangement consists of a partially transparent mirror-coated beam splitter (4) inclined at an angle to the main axis (5) of the converging lens system (1) on the specimen side and at least one plane mirror (3) positioned essentially transversely and/or parallel to the main axis (5) of the converging lens system (1) on the specimen side.

**5.** Projector in accordance with Claim 4, **characterised in that** the beam splitter (4) is positioned at an angle of approximately 35° to 55°, preferably 45°, to the main axis (5) of the converging lens system (1) on the specimen side.

**6.** Projector in accordance with Claim 3, **characterised in that** the reflector arrangement incorporates a first plane mirror (30) positioned at an angle of approximately 35° to 55°, preferably 45°, to the main axis (5) of the converging lens system (1) on the specimen side.

**7.** Projector in accordance with Claim 6, **characterised in that** the reflector arrangement incorporates a second plane mirror (32), which is positioned in the beam path between the first plane mirror (30) and the Fresnel lens (2) and is inclined at an angle of approximately 35° to 55°, preferably 45°, to its main axis.

8. Projector in accordance with Claim 7, **characterised in that** the second plane mirror (32) and the Fresnel lens (2) can be rotated as a unit (34) in relation to the converging lens system (1) on the specimen side and the first plane mirror (30) about an axis (x-x) positioned transversely to the main axes (5, 6) of the converging lens system (1) on the specimen side and of the Fresnel lens (2).

9. Projector in accordance with one of Claims 3 to 8, **characterised in that** the reflector arrangement (3, 4; 30, 32) and the Fresnel lens (2) can be pivoted as a unit (8) in relation to the converging lens system (1) on the specimen side about an axis (11) positioned transversely to the said lens system's main axis (5).

10. Projector in accordance with Claim 1, **characterised in that** the specimen holder is a turntable (21) that can be driven in rotation.

**Revendications**

1. Appareil de projection pour des démonstrations ou à des fins publicitaires, comprenant un support d'objet (21) recevant un objet dont les dimensions maximales sont prédéterminées ainsi que chaque fois un système de lentilles collectrices (1, 2) prévu sur l'axe optique de l'appareil de projection, du côté objet et du côté image, caractérisé en ce que le support d'objet (21) est réalisé pour recevoir un objet tridimensionnel (O), le système de lentilles collectrices du côté image comprenant une lentille de Fresnel (2), la longueur du chemin optique mesurée sur l'axe optique (5, 6) entre les deux systèmes de lentilles collectrices (1, 2) étant principalement égale à la somme de leur distances focales, le diamètre des lentilles des systèmes de lentilles collectrices (1, 2) étant supérieur à la dimension de l'objet (O) dont on forme l'image, dimension mesurée transversalement à l'axe principal (5) du système de lentilles collectrices (1) du côté objet, et la distance entre le support d'objet (21) et le système de lentilles collectrices du côté objet est suffisamment réduite pour que l'objet (0) donne une image au moins en partie dans le chemin des rayons derrière la lentille de Fresnel (2) sous la forme d'une image aérienne (P) tridimensionnelle.

2. Appareil de projection selon la revendication 1, caractérisé en ce que le système de lentilles collectrices du côté image se compose d'une lentille de Fresnel (2) dont la distance focale est supérieure à la distance focale du système de lentilles collectrices (1) du côté objet.

3. Appareil de projection selon la revendication 1 ou 2, caractérisé en ce qu'il est réalisé sous la forme d'un appareil sur pied, avec le support d'objet (21) placé en dessous, au-dessus de celui-ci, le système de lentilles collectrices (1) du côté objet, par-dessus une installation à réflecteur (3, 4 ; 30, 32) et latéralement à côté de celui-ci, la lentille de Fresnel (2).

4. Appareil de projection selon la revendication 3, caractérisé en ce que l'installation de réflexion se compose d'un diviseur de faisceau (4) en forme de miroir semi-transparent, incliné par rapport à l'axe principal (5) du système de lentilles collectrices (1) du côté objet et au moins un miroir plan (3) pratiquement transversal et/ou parallèle à l'axe principal (5) du système de lentilles collectrices (1) du côté objet.

5. Appareil de projection selon la revendication 4, caractérisé en ce que le diviseur de faisceau (4) est incliné sous un angle d'environ 35° à 55°, de préférence 45° par rapport à l'axe principal (5) du système de lentilles collectrices (1) du côté objet.

6. Appareil de projection selon la revendication 3, caractérisé en ce que l'installation de réflexion comprend un premier miroir plan (30) incliné d'un angle d'environ 35° à 55°, de préférence 45° par rapport à l'axe principal (5) du système de lentilles collectrices (1) du côté objet.

7. Appareil de projection selon la revendication 6, caractérisé en ce que l'installation de réflexion comprend un second miroir plan (32) incliné dans le chemin des rayons entre le premier miroir plan (30) et la lentille de Fresnel (2), avec un angle d'environ 35° à 55° et de préférence de 45° par rapport à l'axe principal.

8. Appareil de projection selon la revendication 7, caractérisé en ce que le second miroir plan (32) et la lentille de Fresnel (2) peuvent tourner comme un ensemble (34) par rapport au système de lentilles collectrices (1) du côté objet et au premier miroir plan (30) autour d'un axe (x-x) transversal par rapport aux axes principaux (5, 6) du système de lentilles collectrices (1) du côté objet et de la lentille de Fresnel (2).

9. Appareil de projection selon l'une des revendications 3 à 8, caractérisé en ce que l'installation de réflexion (3, 4 ; 30, 32) et la lentille de Fresnel (2) sont pivotantes sous la forme d'un ensemble (8) par rapport au système de lentilles collectrices (1) du côté objet, autour d'un axe (11) situé transversalement par rapport à son axe principal (5).

10. Appareil de projection selon la revendication 1, caractérisé en ce que le support d'objet est un plateau tournant (21) entraîné en rotation.

## Fig. 1

Fig. 2

Fig. 3

Fig.4a

27

24

23

1b

Fig.4b

23

27

25

26

1a

1b

Fig.5

2

8

7

14

EP 0 616 699 B1

Fig.6a

14

22

22

21

14

21

22

20

Fig. 6b

21

Fig. 7a

Fig. 7b

Fig. 8

Fig. 9a

Fig. 9 b

## Fig. 10 a

## Fig. 10 b